# EUROPÄISCHE PATENTANMELDUNG

(11) **EP 4 053 469 A1**
(43) Veröffentlichungstag der Anmeldung: **07.09.2022**
(21) Anmeldenummer: 22154405.9
(22) Anmeldetag: 01.02.2022
(51) Int. Cl.: F24S 25/613, F24S 25/615

(54) **TRAGGESTELL ZU EINER SCHRÄGEN BEFESTIGUNG EINES SOLARMODULS AUF EINEM DACH**

(30) Priorität: 01.03.2021 DE 102021104862
(71) Anmelder: fischerwerke GmbH & Co. KG, 72178 Waldachtal (DE)
(72) Erfinder: Mazzucato, Federico, 35020 Legnaro (PD) (IT)
(74) Vertreter: Suchy, Ulrich Johannes

(57) **Zusammenfassung**

Zu einer schrägen Befestigung von Solarmodulen auf einem Sheddach, Paralleldach oder einem Dach mit aneinandergereihten Tonnendächern schlägt die Erfindung ein Traggestell (1) mit einer Tragstrebe (10), auf der die Solarmodule befestigt werden, einer winkel- und längsverstellbar an der Tragstrebe (10) angeordneten Stützstrebe (11), und um parallele und senkrechte Achsen (16, 17) schwenkbare Standfüßen (8) vor, die schräg auseinander und nach oben verlaufende Befestigungslaschen (19) an ihren Enden aufweisen.

## Beschreibung

Die Erfindung betrifft ein Traggestell zu einer schrägen Befestigung eines Solarmoduls auf einem Dach mit den Merkmalen des Oberbegriffs des Anspruchs 1.

Die Patentanmeldung EP 2 383 527 A1 offenbart ein dreiecksförmiges, aus drei geraden Profilstäben zusammengesetztes Traggestell zu einer schrägen Befestigung eines Solarmoduls auf einem Dach. Zur Befestigung des Solarmoduls werden zwei Traggestelle parallel zueinander, mit Abstand voneinander, und von einer Seite gesehen deckungsgleich nebeneinander angeordnet und mit zwei Querprofilen verbunden, auf dem das oder mehrere Solarmodule befestigt wird/werden. An einem unteren Profilstab des Traggestells sind zwei Standfüße mit ebenen Standflächen zur Befestigung des Traggestells auf einem Flachdach angeordnet.

Aufgabe der Erfindung ist, ein Traggestell zu einer schrägen Befestigung eines Solarmoduls auf einem Sheddach, Paralleldach oder einer Aneinanderreihung von Tonnendächern vorzuschlagen. Ein Sheddach ist eine Aneinanderreihung von Pultdächern und ein Paralleldach eine Aneinanderreihung von Satteldächern. Solche Dächer sind beispielsweise auf Fabrikhallen gebräuchlich. Allgemein soll das erfindungsgemäße Traggestell auf einem Dach aufstellbar sein, das zueinander parallele Rinnen oder dergleichen aufweist, zwischen denen das Dach Erhebungen aufweist.

Diese Aufgabe wird erfindungsgemäß durch die Merkmale des Anspruchs 1 gelöst. Das erfindungsgemäße Traggestell weist zwei Standfüße an einer Unterseite auf, wobei die Unterseite eine Seite des Traggestells ist, die einem Dach zugewandt ist, wenn das Traggestell wie vorgesehen auf dem Dach aufgestellt ist. Ein oder auch mehrere Solarmodule werden auf einer der Unterseite abgewandten Oberseite des Traggestells angeordnet. Dabei verläuft die Oberseite des Traggestells schräg oder ist jedenfalls das Traggestell so ausgebildet, dass das oder die Solarmodule in einem Winkel schräg zu einer von den Standfüßen definierten Standebene gehalten sind. Ein Abstand der Standfüße voneinander ist vorzugsweise einstellbar, um den Abstand der Standfüße des Traggestells an einen Abstand paralleler Rinnen oder dergleichen des Daches anpassen zu können.

Erfindungsgemäß weist jeder Standfuß zwei äußere, schräg bezüglich des jeweiligen Standfußes auseinander, bezüglich des Traggestells nach oben verlaufende Standflächen an einander fernen Enden des jeweiligen Standfußes an der der Oberseite des Traggestells abgewandten Unterseite der Standfüße auf. "Nach oben" bedeutet, dass die äußeren Standflächen der Standfüße sich auf einer dem Traggestell zugewandten Oberseite der von den Standfüßen definierten Standebene des Traggestells befinden. Dabei ist die Standebene bei einem Dach, das Erhebungen zwischen den Standfüßen des Traggestells aufweist, eine gedachte, von den Erhebungen des Daches durchsetzte Ebene. Insbesondere verläuft die Standebene durch die untersten Punkte der Standfüße und insbesondere senkrecht zu einer Hauptflächenerstreckung des Traggestells.

Beim Aufstellen des Traggestells auf einem parallele Rinnen aufweisenden Dach, wobei die Standfüße des Traggestells in den Rinnen angeordnet werden, gelangen die äußeren, schrägen Standflächen der Standfüße in Anlage an schräge oder gewölbte Seitenflächen der Rinnen. Zwischen den beiden äußeren, schrägen Standflächen können die Standfüße eine oder mehrere weitere Standflächen, insbesondere in der Standebene des Traggestells, aufweisen. Allerdings sind solche weitere Standflächen zwischen den äußeren Standflächen der Standfüße beim Anordnen in einer Rinne normalerweise nicht notwendig, weil ein Bereich zwischen den äußeren, schrägen Standflächen der Standfüße "hohl" steht, das heißt nicht auf einem Grund oder auf einer anderen Stelle der Rinne anliegt.

Vorzugsweise ist ein Abstand der äußeren, schrägen Standflächen der Standfüße und ihr Winkel zu der Standebene des Traggestells an einen Querschnitt der parallelen Rinnen des Daches, auf dem das Traggestell aufgestellt werden soll, angepasst oder beispielsweise durch Schwenken oder Biegen einstellbar. Allerdings ist auch eine Aufstellung des Traggestells mit starren äußeren, schrägen Standflächen an den Standfüßen ohne Anpassung an eine Schräge oder Wölbung der Seitenflächen der Rinnen möglich.

Eine Aufstellung des Traggestells auf anderen Dächern, beispielsweise auch auf einem Flachdach, oder an anderer Stelle als auf einem Dach, ist möglich.

Eine Ausgestaltung der Erfindung sieht vor, dass die Standfüße voneinander weg nach außen abstehende Laschen an ihren einander fernen Enden aufweisen, deren der Oberseite des Traggestells abgewandte Unterseiten die äußeren Standflächen bilden und die schräg oder bogenförmig nach oben gebogen werden oder sind. Beispielsweise weisen die Standfüße offene oder geschlossene Hohlprofile auf, deren eine Seiten an Enden der Hohlprofile überstehen und die die Standflächen aufweisenden Laschen bilden.

Um das Traggestell längs oder quer zu den Rinnen des Daches aufstellen zu können, sieht eine Ausgestaltung der Erfindung vor, dass die Standfüße um zu der Standebene des Traggestells senkrechte oder eventuell auch in einem Winkel schräg zu der Standebene verlaufende Achsen schwenkbar sind. Es genügt bei Ausgestaltungen der Erfindung, wenn die Standfüße längs und quer zu einer Ebene anordenbar sind, in der sich das Traggestell befindet.

Zu einer Ausrichtung der Standfüße parallel oder eventuell auch in einem Winkel zu der Standebene des Traggestells sieht eine Ausgestaltung der Erfindung vor, dass die Standfüße um zu der Standfläche parallele Achsen schwenkbar sind.

Eine Ausführung der Erfindung sieht vor, dass das Traggestell eine Tragstrebe, auf der das oder die Solarmodule befestigbar ist/sind, und eine Stützstrebe in einem vorzugsweise einstellbaren Winkel zu der Tragstrebe aufweist. Die Standfüße sind insbesondere an einem ersten Ende der Tragstrebe und an einem ersten Ende der Stützstrebe angeordnet.

Ein zweites Ende der Stützstrebe ist bei Ausgestaltungen der Erfindung an der Tragstrebe angeordnet. Zu einer Ver- und Einstellung einer Neigung des oder der Solarmodule und/oder zu einer Anpassung des Abstandes der Standfüße voneinander an Abstände der Rinnen des Daches ist das zweite Ende der Stützstrebe vorzugsweise in einer Längsrichtung der Tragstrebe verstellbar.

In bevorzugter Ausgestaltung der Erfindung weist das Traggestell an seiner Unterseite einen Freiraum für die Erhebungen des Daches zwischen den Rinnen des Daches zwischen den Standfüßen auf. Das Traggestell weist bei dieser Ausgestaltung der Erfindung keine oder allenfalls eine hoch angeordnete Verbindungsstrebe oder sonstige Verbindung zwischen der Tragstrebe und der Stützstrebe auf. Eine eventuell vorhandene Verbindungsstrebe oder sonstige Verbindung ist so hoch über der Standebene angeordnet, dass sie sich über der Erhebung des Daches zwischen den Rinnen des Daches, in denen die Standfüße des Traggestells angeordnet sind, befindet.

Die vorstehend in der Beschreibung genannten Merkmale und Merkmalskombinationen, Ausführungen und Ausgestaltungen der Erfindung, sowie die nachfolgend in der

Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines in der Zeichnung dargestellten Ausführungsbeispiels näher erläutert. Es zeigen:
- Figuren 1-2: ein Dach, auf dem mittels erfindungsgemäßer Traggestelle Solarmodule schräg befestigt sind, in einer perspektivischen Darstellung;
- Figuren 3-4: eine Schnittdarstellung des Daches mit den Traggestellen und Solarmodulen aus Figuren 1 und 2;
- Figur 5: ein erfindungsgemäßes Traggestell mit längs gestellten Standfüßen in einer perspektivischen Darstellung;
- Figur 6: das Traggestell aus Figur 1 mit quergestellten Standfüßen; und
- Figur 7: eine Seitenansicht eines Standfußes des Traggestells aus Figuren 1, 3 und 5.
Das erfindungsgemäße Traggestell 1 ist zu einer schrägen Befestigung eines oder mehrerer Solarmodule 2 auf einem Sheddach, Paralleldach oder auf einem Dach 3 mit einer Aneinanderreihung von Tonnendächern vorgesehen, das heißt auf einem Dach 3, das zueinander parallele Rinnen 4 aufweist, zwischen denen das Dach 3 zueinander parallele und parallel zu den Rinnen 4 verlaufende Erhebungen 5 aufweist. Ein Sheddach weist eine Aneinanderreihung von Pultdächern und ein Paralleldach eine Aneinanderreihung von Satteldächern auf. Die Befestigung auf anderen Dächern, auch auf einem Flachdach oder an anderer Stelle als auf einem Dach ist ebenfalls möglich (nicht dargestellt).

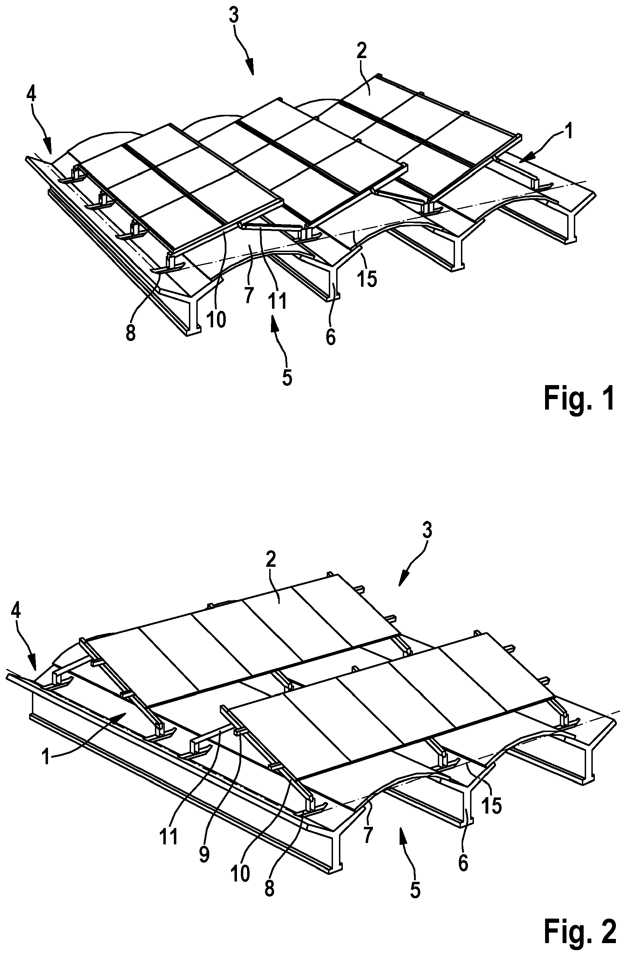

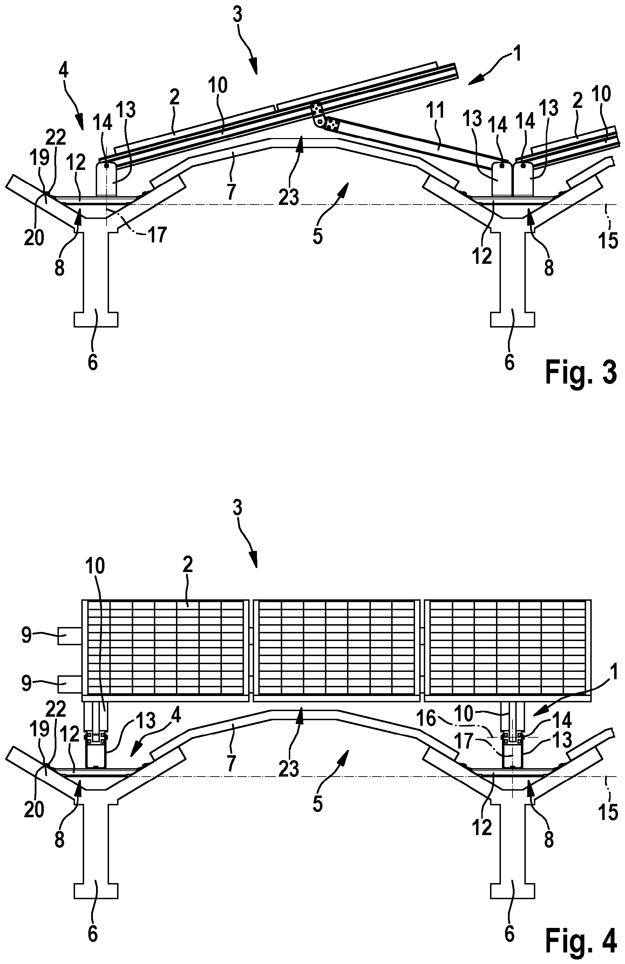

Die Figuren 1 bis 4 zeigen die Befestigung von Solarmodulen 2 mittels erfindungsgemäßer Traggestelle 1 längs und quer auf einem aneinandergereihte Tonnendächer aufweisenden Dach 3 in perspektivischer Darstellung (Figuren 1 und 2) und in einer Schnittdarstellung (Figuren 3 und 4). Das Dach 3 weist langgestreckte Träger aus Stahlbeton mit Y-förmigem Querschnitt auf, die daher im Folgenden als Y-Träger 6 bezeichnet werden. Die Y-Träger 6 sind parallel zueinander und mit Abstand voneinander angeordnet. Zwischenräume zwischen den Y-Trägern 6 sind mit zylindersegmentschalenförmigen, lichtdurchlässigen Dachelementen 7 abgedeckt, deren Wölbung nach oben gerichtet ist und die die Erhebungen 5 zwischen den Rinnen 4 des Daches 3 bilden. Querhäupter der Y-Träger 6 bilden die zueinander parallelen Rinnen 4 des Daches 3.

Zur Befestigung der Solarmodule 2 werden mehrere Traggestelle 1 parallel zueinander und mit Abstand nebeneinander von einer Seite aus gesehen deckungsgleich auf dem Dach 3 aufgestellt, so dass Standfüße 8 der Traggestelle 1 sich in den Rinnen 4 des Daches 3 befinden. Die Traggestelle 1 werden mit zwei oder mehr geraden Querträgern 9 verbunden, auf denen die Solarmodule 2 befestigt werden.

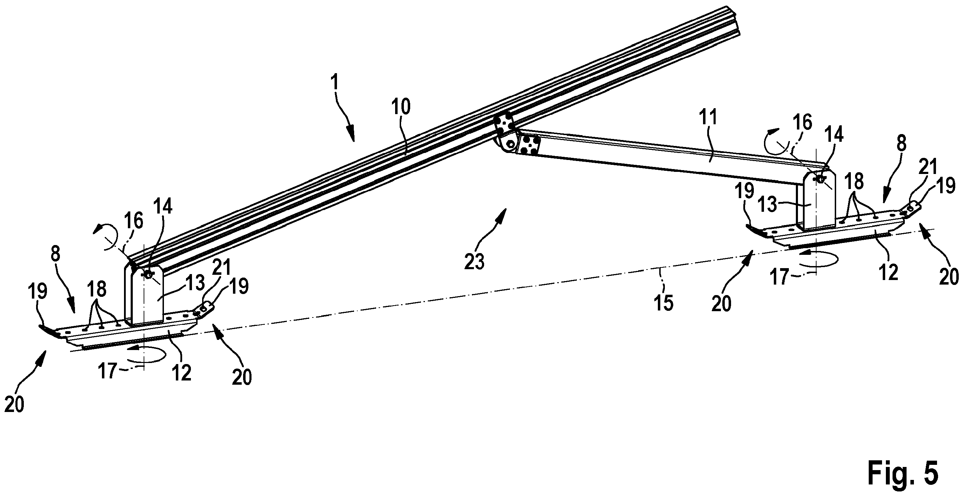

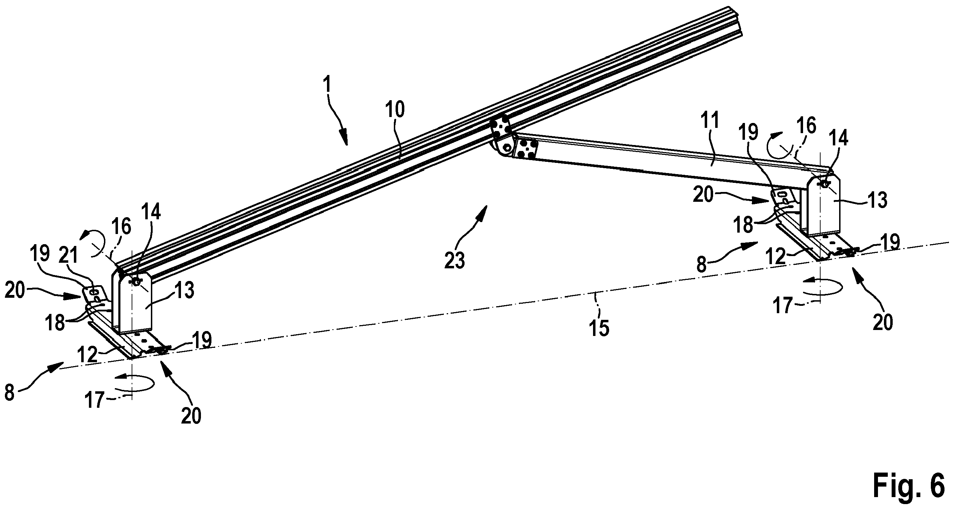

Jedes Traggestell 1 weist, wie in Figuren 5 und 6 zu sehen, eine Tragstrebe 10 und eine Stützstrebe 11 auf, an deren ersten Enden die Standfüße 8 angeordnet sind. Die Tragstrebe 10 ist im Ausführungsbeispiel, ebenso wie die Querträger 9, ein gerades, offenes oder geschlossenes Spezialprofil, das beispielsweise durch Strangpressen oder Rollformen hergestellt sein kann. Die Stützstrebe 11 weist im Ausführungsbeispiel ein gerades Rechteck- oder quadratisches Rohrprofil auf. Andere Ausführungen der Querträger 9, Tragstrebe 10 und Stützstrebe 11 sind möglich.

Ein zweites Ende der Stützstrebe 11 ist winkelverstellbar und in einer Längsrichtung der Tragstrebe 10 verschiebbar und sowohl gegen Schwenken, als auch gegen Verschieben festlegbar an der Tragstrebe 10 angeordnet. Die Solarmodule 2 werden auf der Tragstrebe 10 oder auf den Querträgern 9 befestigt, die ihrerseits auf den Tragstreben 10 der mit Abstand nebeneinander angeordneten Traggestelle 1 befestigt sind.

Durch Einstellung eines Winkels zwischen den Tragstreben 10 und den Stützstreben 11 der Traggestelle 1 lässt sich eine Neigung der Solarmodule 2, das heißt ihre Anordnung schräg in einem Winkel zu dem Dach 3, einstellen. Außerdem wird durch den Winkel zwischen den Tragstreben 10 und den Stützstreben 11 und eine Position, in der das zweite Ende der Stützstrebe 11 in der Längsrichtung der Tragstrebe 10 an der Tragstrebe 10 festgelegt wird, ein Abstand der Standfüße 8 an den Abstand der Rinnen 4 des Daches 3 angepasst.

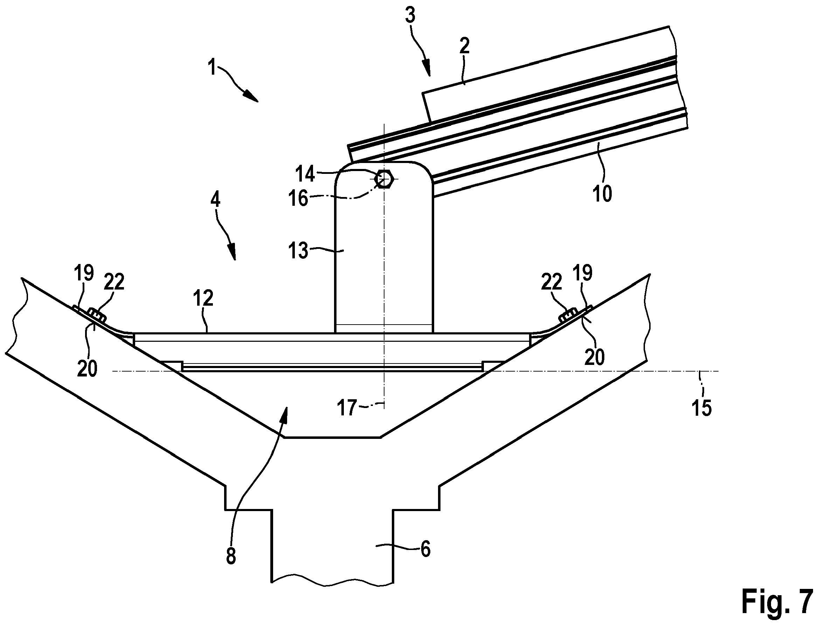

Die Figur 7 zeigt einen der beiden Standfüße 8 des erfindungsgemäßen Traggestells 1. Der Standfuß 8 weist ein gerades U-Profil 12, das beispielsweise aus Blech gebogen, stranggepresst, rollgeformt oder in anderer Weise hergestellt sein kann und das einen Grundkörper des Standfußes 8 bildet, auf. Das U-Profil 12 ist mit einem Verbinder 13 gelenkig mit dem ersten Ende der Tragstrebe 10 beziehungsweise dem ersten Ende der Stützstrebe 11 verbunden. Der Verbinder 13 ist im Ausführungsbeispiel ein zu einem U gebogener Blechstreifen, dessen Schenkel an gegenüberliegenden Seiten der Tragstrebe 10 beziehungsweise der Stützstrebe 11 anliegen und mit einer durchgesteckten Schraube 14 nahe an ihren Enden mit dem ersten Ende der Tragstrebe 10 beziehungsweise der Stützstrebe 11 verbunden sind. Ein Joch des U-förmigen Verbinders 13 liegt an einem Steg des U-Profils 12 an, wobei der Steg eine die beiden Flansche des U-Profils 12 verbindende Wand oder Seite des U-Profils 12 ist. Mittels einer in der Zeichnung nicht sichtbaren Schraube mit aufgeschraubter Mutter, die durch ein Loch in einer Mitte des Jochs des U-förmigen Verbinders 13 und durch ein Loch im Steg des U-Profils 12 gesteckt ist, ist das den eigentlichen Standfuß bildende U-Profil 12 mit dem Joch des U-förmigen Verbinders 13 verbunden, der Teil des Standfußes 8 ist. Eine offene Seite des U-Profils 12 ist der Tragstrebe 10 beziehungsweise der Stützstrebe 11 abgewandt.

Zu einem Ausrichten der Standfüße 8, genau genommen ihrer U-Profile 12, in einer gemeinsamen Ebene, die hier als Standebene 15 des Traggestells 1 bezeichnet wird, lassen sich die Standfüße 8 um die durch die Verbinder 13 und die ersten Enden der Tragstrebe 10 und der Stützstrebe 11 gesteckten Schrauben 14 schwenken und durch Festziehen einer in der Zeichnung nicht sichtbaren Mutter feststellen. Die Schrauben 14 definieren zu der Standebene 15 parallele Achsen 16, um die die Standfüße 8 schwenkbar sind. Die Achsen 16 verlaufen senkrecht zu einer von der Tragstrebe 10 und der Stützstrebe 11 aufgespannten Ebene des Traggestells 1. Die Standfüße 8 lassen sich auch schräg in einem Winkel zu der Standebene 15 ausrichten.

Die Standebene 15 ist eine gedachte Ebene, die durch die untersten Punkte der Standfüße 8 und insbesondere senkrecht zu einer Hauptflächenerstreckung des Traggestells 1 verläuft. Die Hauptflächenerstreckung des Traggestells 1 ergibt sich aus der von der Tragstrebe 10 und der Stützstrebe 11 aufgespannten Ebene. Die Standebene 15 schließt somit mit der Unterkante des jeweiligen U-Profils 12 ab. Da die U-Profile 12 im Wesentlichen auf einer horizontalen Ebene liegen, ergibt sich eine gemeinsame Standebene 15 des Traggestells 1 sowie mehrerer Traggestelle 1.

Durch Drehen der U-Profile 12 der Standfüße 8 um die in der Zeichnung nicht sichtbaren Schrauben, die die U-Profile 12 mit den Verbindern 13 verbinden, lassen sich die Standfüße 8, genau genommen ihre U-Profile 12, um zu der Standebene 15 senkrechte Achsen 17 schwenken, die in der von der Tragstrebe 10 und der Stützstrebe 11 aufgespannten Ebene verlaufen. Die U-Profile 12, die die eigentlichen Standfüße 8 bilden, lassen sich dadurch wie in Figur 5 zu sehen längs oder wie in Figur 6 zu sehen quer zum Traggestell 1, das heißt in die von der Tragstrebe 10 und der Stützstrebe 11 aufgespannte Ebene oder senkrecht zu der von der Tragstrebe 10 und der Stützstrebe 11 aufgespannten Ebene ausrichten. Beliebige Zwischenstellungen sind möglich, wobei auch Ausführungen des Traggestells 1 möglich sind, die nur die Ausrichtung der Standfüße 8 längs oder quer zum Traggestell 1 zulassen (nicht dargestellt). Dadurch können die Standfüße 8 beziehungsweise ihre U-Profile 12 quer zu den Y-Trägern 6 des Daches 3 ausgerichtet werden, wenn das Traggestell 1 längs oder quer zu den Y-Trägern 6 aufgestellt wird (Figuren 1 bis 4).

Die U-Profile 12 der Standfüße 8 weisen eine Reihe Löcher 18 in einer Quermitte ihres Stegs auf, durch die die in der Zeichnung nicht sichtbare Schraube zum Verbinden mit dem Verbinder 13 steckbar ist. Dadurch lassen sich die Standfüße 8 in Stufen verstellen, die so groß sind wie der Abstand der Löcher 18 voneinander ist. Durch Langlöcher oder einen durchgehenden Schlitz ist auch eine stufenlose Verstellung der Standfüße 8 in ihrer Längsrichtung möglich (nicht dargestellt). Durch die Verstellbarkeit der U-Profile 12 der Standfüße 8 in ihrer Längsrichtung lässt sich ein Abstand der beiden Standfüße 8 des Traggestells 1 ver- beziehungsweise einstellen und dadurch an den Abstand der Y-Träger 6 des Daches 3 anpassen.

An Enden des U-Profils 12 steht der Steg des U-Profils 12 über die Flansche des U-Profils 12 über, wodurch an beiden Enden des U-Profils 12 jeweils eine Lasche gebildet ist, die hier als Befestigungslasche 19 bezeichnet wird. Die Befestigungslaschen 19 befinden sich wie beschrieben an den Enden des U-Profils 12 und damit an einander fernen Enden des Standfußes 8. Sie sind schräg zu einer Längserstreckung des U-Profils 12 nach oben beziehungsweise zu der Seite der Standebene 15 des Traggestells 1 abgewinkelt, auf der sich die Tragstrebe 10 und die Stützstrebe 11 befinden.

Zum beziehungsweise beim Aufstellen der Traggestelle 1 werden die U-Profile 12 der Standfüße 8 der Traggestelle 1 quer zu den Y-Trägern 6 des Daches 3 ausgerichtet, so dass die Befestigungslaschen 19 an schrägen, eventuell auch gewölbten Seitenflächen der Rinnen 4 zur Anlage kommen, die die Querhäupter der Y-Träger 6 bilden. Der Tragstrebe 10 und der Stützstrebe 11 abgewandte Unterseiten der Befestigungslaschen 19 bilden an jedem Standfuß 8 zwei Standflächen 20, die an jedem Standfuß 8 schräg auseinander und nach oben, das heißt zu der Seite der Standebene 15 des Traggestells 1 verlaufen, auf der sich die Tragstrebe 10 und die Stützstrebe 11 befinden.

Die Befestigungslaschen 19 weisen Befestigungslöcher 21 auf, um sie beispielsweise mit Betonschrauben 22 (Figur 7), die in die Y-Träger 6 des Daches 3 geschraubt werden, auf den Y-Trägern 6 zu befestigen.

Die Flansche der U-Profile 12 der Standfüße 8 sind so abgeschrägt, dass sie nicht über die schrägen Standflächen 20 der schräg nach oben abgewinkelten Befestigungslaschen 19 überstehen. Im Ausführungsbeispiel liegen nur die abgewinkelten Befestigungslaschen 19 und eventuell die abgeschrägten Flansche der U-Profile 12 an den Y-Trägern 6 des Daches 3 an, dazwischen liegen die U-Profile 12 der Standfüße 8 der Traggestelle 1 nicht auf, wie in Figur 7 zu sehen.

Zwischen den Standfüßen 8 weist das erfindungsgemäße Traggestell 1 einen Freiraum 23 auf, der oben von der Tragstrebe 10 und der Stützstrebe 11 begrenzt wird und unten offen ist. Das ermöglicht die Aufstellung des Traggestells 1 quer zu den Y-Trägern 6 des Daches 3 über die zylinderschalenförmig nach oben gewölbten Dachelemente 7, die Erhebungen des Daches 3 zwischen den Y-Trägern 6 bilden, hinweg.

### Bezugszeichenliste

- 1: Traggestell
- 2: Solarmodul
- 3: Dach
- 4: Rinne
- 5: Erhebung
- 6: Y-Träger
- 7: Dachelement
- 8: Standfuß
- 9: Querträger
- 10: Tragstrebe
- 11: Stützstrebe
- 12: U-Profil
- 13: Verbinder
- 14: Schraube
- 15: Standebene
- 16: parallele Achse
- 17: senkrechte Achse
- 18: Loch
- 19: Befestigungslasche
- 20: Standfläche
- 21: Befestigungsloch
- 22: Betonschraube
- 23: Freiraum

## Patentansprüche

1. Traggestell zu einer schrägen Befestigung eines Solarmoduls (2) auf einer Oberseite des Traggestells (1) auf einem Dach (3), wobei das Traggestell (1) zwei Standfüße (8) aufweist, **dadurch gekennzeichnet, dass** jeder Standfuß (8) zwei äußere, schräge, der Oberseite abgewandte Standflächen (20) an einander fernen Enden des Standfußes (8) aufweist, die an jedem Standfuß (8) schräg nach oben auseinander verlaufen.

2. Traggestell nach Anspruch 1, **dadurch gekennzeichnet, dass** die Standfüße (8) abgewinkelte Befestigungslaschen (19) an ihren einander fernen Enden aufweisen, die die schrägen Standflächen (20) bilden.

3. Traggestell nach Anspruch 1 oder 2, **dadurch gekennzeichnet, dass** die Standfüße (8) um zu einer Standebene (15) senkrechte Achsen (17) schwenkbar und/oder längs und quer zu dem Traggestell (1) anordenbar sind.

4. Traggestell nach einem oder mehreren der Ansprüche 1 bis 3, **dadurch gekennzeichnet, dass** die Standfüße (8) um zu der Standebene (15) parallele Achsen (16) schwenkbar an dem Traggestell (1) angeordnet sind.

5. Traggestell nach einem oder mehreren der vorhergehenden Ansprüche, **dadurch gekennzeichnet, dass** die Standfüße (8) in ihrer Längsrichtung verstellbar sind und/oder ein Abstand der Standfüße (8) voneinander einstellbar ist.

6. Traggestell nach einem oder mehreren der vorhergehenden Ansprüche, **dadurch gekennzeichnet, dass** das Traggestell (1) eine Tragstrebe (10), auf der das Solarmodul (2) befestigbar ist, und eine Stützstrebe (11) in einem Winkel zu der Tragstrebe (10) aufweist.

7. Traggestell nach Anspruch 6, **dadurch gekennzeichnet, dass** ein Standfuß (8) an einem ersten Ende der Tragstrebe (10) und ein Standfuß (8) an einem ersten Ende der Stützstrebe (11) angeordnet ist.

8. Traggestell nach Anspruch 6 oder 7, **dadurch gekennzeichnet, dass** ein zweites Ende der Stützstrebe (11) an der Tragstrebe (10) angeordnet ist.

9. Traggestell nach einem oder mehreren der Ansprüche 6 bis 8, **dadurch gekennzeichnet, dass** das zweite Ende der Stützstrebe (11) in einer Längsrichtung der Tragstrebe (10) verstellbar ist.

10. Traggestell nach einem oder mehreren der vorhergehenden Ansprüche, **dadurch gekennzeichnet, dass** das Traggestell (1) einen Freiraum (23) zwischen den Standfüßen (8) an der der Unterseite des Traggestells (1) aufweist.
